Europäisches Patentamt

**European Patent Office**

**Office européen des brevets**

(11) Veröffentlichungsnummer: **0 381 850**
**A1**

(12) # EUROPÄISCHE PATENTANMELDUNG

(21) Anmeldenummer: **89123632.5**

(51) Int. Cl.5: **H01M 8/24, H01M 8/02, H01M 8/12**

(22) Anmeldetag: **21.12.89**

(30) Priorität: **06.02.89 CH 404/89**

(43) Veröffentlichungstag der Anmeldung:
**16.08.90 Patentblatt 90/33**

(84) Benannte Vertragsstaaten:
**CH DE FR GB IT LI NL SE**

(71) Anmelder: **ASEA BROWN BOVERI AG**
**Haselstrasse**
**CH-5401 Baden(CH)**

(72) Erfinder: **Bossel, Ulf, Dr.**
**Baldeggstrasse 13**
**CH-5400 Baden(CH)**

(54) **Vorrichtung zur Energieumwandlung mittels Hochtemperatur-Brennstoffzellen und zwischen diesen angeordneten Bauelementen zur Führung der gasförmigen Medien.**

(57) Vorrichtung zur Energieumwandlung mittels HochtemperaturBrennstoffzellen bestehend aus einem keramischen Feststoffelektrolyten, einer Sauerstoffelektrode und einer Brennstoffelektrode und dazwischenliegenden Zwischenplatten (1) mit Rippen (2) und U-förmigen Vertiefungen (3) auf beiden Seiten, wobei im Grundriss diese Vertiefungen (3) mit ihrer offenen Seite auf der Brennstoffseite entgegengesetzt wie auf der Sauerstoffseite liegen. Dadurch wird der Strom des gasförmigen Sauerstoffträgers in entgegengesetzter Richtung wie derjenige des gasförmigen Brennstoffs geführt. Variante mit Integration der Kanäle der gasförmigen Medien in die Zwischenplatte (1). Vorschaltung von Wärmeaustauschern in den Kanälen.

FIG.1

FIG.2

EP 0 381 850 A1

## Vorrichtung zur Energieumwandlung mittels HochtemperaturBrennstoffzellen und zwischen diesen angeordneten Bauelementen zur Führung der gasförmigen Medien

Technisches Gebiet

Hochtemperatur-Brennstoffzellen zur Umwandlung von chemischer Energie in elektrische Energie. Die elektrochemische Energieumwandlung und die hierzu benötigten Vorrichtungen gewinnen dank ihres guten Wirkungsgrades gegenüber anderen Umwandlungsarten an Bedeutung.

Die Erfindung bezieht sich auf die Weiterentwicklung der elektrochemischen Hochtemperatur-Zellen unter Verwendung von keramischen Feststoffelektrolyten als Ionenleiter, wobei die Zellen weitgehend unabhängig vom verwendeten Brennstoff sein und eine raumsparende Anordnung gewähren sollen.

Insbesondere betrifft die Erfindung eine Vorrichtung zur Energieumwandlung mittels Hochtemperatur-Brennstoffzellen und zwischen diesen angeordneten Bauelementen zur Führung der gasförmigen Medien, wobei eine Vielzahl von ebenen Brennstoffzellen bestehend aus einem keramischen Feststoffelektrolyten aus stabilisiertem $ZrO_2$, einer Sauerstoffelektrode aus einem La/Mn-Perowskit und einer Brennstoffelektrode aus einem Ni/$ZrO_2$-Cermet stapelartig angeordnet ist.

Stand der Technik

Hochtemperatur-Brennstoffzellen mit keramischem Feststoffelektrolyt sind aus zahlreichen Veröffentlichungen bekannt. Die eigentlichen Elemente für derartige Zellen können die verschiedensten Formen und Abmessungen aufweisen. Um die ohmschen Spannungsverluste klein zu halten, wird allenthalben versucht, die Dicke der Elektrolytschicht möglichst niedrig zu halten. Form und Abmessungen der Elemente richten sich zudem nach der Forderung der Möglichkeit der elektrischen Serieschaltung einer Vielzahl von Zellen, um auf die nötige Klemmenspannung zu kommen und die Ströme vergleichsweise niedrig zu halten.

Bei elektrochemischen Geräten (Zellen) müssen an jedem Ort der Energieumwandlung drei Dinge gleichzeitig zu- bzw. abgeführt werden: Chemischer Stoff, Oxydationsmittel und elektrischer Strom. Eine mögliche Anordnung mit sehr kompakter Bauweise ist die abwechselnde Stapelung von beidseitig mit Elektroden versehenen Elektrolytplatten und sogenannten "Bipolarplatten". Dabei haben die Bipolarplatten die Aufgabe der Führung der gasförmigen Medien entlang der beiden Seiten und die Leitung von elektrischem Strom durch die Platte hindurch. Eine Bipolarplatte ist deshalb aus elektrisch leitendem Material hergestellt oder es sind elektrische Leiter in sie eingearbeitet. In der Regel werden die gasförmigen Medien von den Kanten her in die Bipolarplatte eingespeist und über ein Kanalsystem, das in die Platte eingearbeitet ist, gleichmässig über die gesamte Fläche verteilt. Meist arbeitet man mit geraden Kanälen. Bei einer Brennstoffzelle wird z.B. die Luft auf der einen Seite des Stapels zu- und auf der anderen Seite des Stapels mit reduziertem Sauerstoffgehalt abgeführt. Der gasförmige Brennstoff strömt senkrecht zur Luft, jedoch durch ein anderes Kanalsystem. Das Strömungsmuster gleicht also dem eines Kreuzstrom-Wärmeaustauschers, wobei tatsächlich vom Strom des einen gasförmigen Mediums an den Strom des anderen Wärme übertragen wird. Bei keramischen Brennstoffzellen, die bei etwa 1000 °C betrieben werden, führt der Kreuzstrom-Wärmeaustausch zu einer stark inhomogenen Temperaturverteilung. Zwischen den von den Eintrittskanten und den von den Austrittskanten gebildeten Ecke entstehen grosse Temperaturdifferenzen, die zu erheblichen Spannungen im keramischen Material führen.

Aus wärmetechnischen Gründen wäre eine Gasführung im Gegenstrom wünschenswert. Dies jedoch bedingt, dass Luftzu- und Gasab- bzw. Gaszu- und Luftabfuhr jeweils an der gleichen Stirnfläche angeordnet sind, was technisch kaum zu verwirklichen ist.

Es besteht daher ein Bedürfnis nach einer Verbesserung der Vorrichtungen zur Energieumwandlung mittels Brennstoffzellen.

Zum Stand der Technik werden die nachfolgenden Druckschriften genannt:
- O.Antonsen, W.Baukal und W.Fischer, "Hochtemperatur-Brennstoffbatterie mit keramischem Elektrolyten", Brown Boveri Mitteilungen Januar/Februar 1966, Seiten 21-30,
- US-A-4 692 274
- US-A-4 395 468
- W.J.Dollard und W.G.Parker, "An overview of the Westinghouse Electric Corporation solid oxide fuel cell program", Extended Abstracts, Fuel Cell Technology and Applications, International Seminar, Den Haag, Niederlande, 26. bis 29. Oktober, 1987,
- F.J.Rohr, High-Temperature Fuel cells, Solid Electrolytes, 1978 by Academic Press, Inc., Seite 431 ff.,
- D.C.Fee et al., Monolithic Fuel Cell Development, Argonne National Laboratory, Paper presented at the 1986 Fuel Cell Seminar, Oct. 26 - 29, 1986, Tucson, AZ, U.S. Department of Energy, The University of Chicago.

Die aus dem Stand der Technik bekannten Anordnungen von Brennstoffzellen und die Führung der gasförmigen Medien befriedigen nicht. Insbesondere besteht ein starkes Bedürfnis nach Verbesserung der wärmetechnischen Verhältnisse und nach Weiterentwicklung der stapelartig aufgebauten Hochtemperatur-Brennstoffzellenaggregate.

Darstellung der Erfindung

Der Erfindung liegt die Aufgabe zugrunde, eine Vorrichtung zur Energieumwandlung mittels Hochtemperatur-Brennstoffzellen mit Feststoffelektrolyt und zwischen diesen angeordneten Bauelementen zur Führung der gasförmigen Medien anzugeben, welche bei weitgehender Freiheit der Anordnung und Schaltung der einzelnen Brennstoffzellen innerhalb eines Stapels eine möglichst optimale Führung der gasförmigen Medien und eine möglichst homogene Temperaturverteilung bei allen Betriebszuständen der Anlage gewährleistet. Dabei soll insbesondere das Gegenstromprinzip sowie der Wärmeaustausch zwischen zuge führten und abgeführten gasförmigen Medien berücksichtigt werden.

Diese Aufgabe wird dadurch gelöst, dass in der eingangs erwähnten Vorrichtung das Bauelement zwischen den Brennstoffzellen aus einer Zwischenplatte mit Rippen und im Grundriss U-förmigen Vertiefungen sowohl auf der Sauerstoffseite wie auf der Brennstoffseite besteht, wobei die U-förmigen Vertiefungen im Grundriss mit ihrer offenen Seite auf der Brennstoffseite der Zwischenplatte entgegengesetzt wie auf der Sauerstoffseite liegen, so dass die von der Zwischenplatte und den benachbarten Brennstoffzellen gebildeten Räume den Strom des gasförmigen Sauerstoffträgers $O_2$ in entgegengesetzter Richtung wie denjenigen des gasförmigen Brenstoffs $CH_4$ führen.

Weg zur Ausführung der Erfindung

Die Erfindung wird anhand der nachfolgenden Figuren, welche gleichzeitig für die Ausführungsbeispiele stehen, beschrieben.

Dabei zeigt:

Fig. 1 eine Draufsicht (Grundriss) bzw. einen Schnitt einer Vorrichtung mit Zwischenplatte und Kanälen,

Fig. 2 eine perspektivische Darstellung einer Zwischenplatte,

Fig. 3 eine perspektivische Darstellung einer Vorrichtung mit Zwischenplatten und Kanälen,

Fig. 4 einen Schnitt (Aufriss) einer Zwischenplatte aus Ioliermaterial und benachbarten Lagen in Serie geschalteter, dachziegelartig angeordneter Brennstoffzellen-Elemente,

Fig. 5 einen Schnitt (Aufriss) einer Zwischenplatte aus elektrisch leitendem Werkstoff und benachbarten Brennstoffzellen,

Fig. 6 eine schematische Draufsicht (Grundriss) bzw. einen Schnitt einer Vorrichtung mit Zwischenplatte und einseitig angeordneten Kanälen,

Fig. 7 eine schematische Draufsicht (Grundriss) einer Vorrichtung mit Zwischenplatte und in diese integrierte Kanalteile,

Fig. 8 eine perspektivische Darstellung einer Vorrichtung mit einem Stapel von Brennstoffzellen und Zwischenplatten und Kanälen.

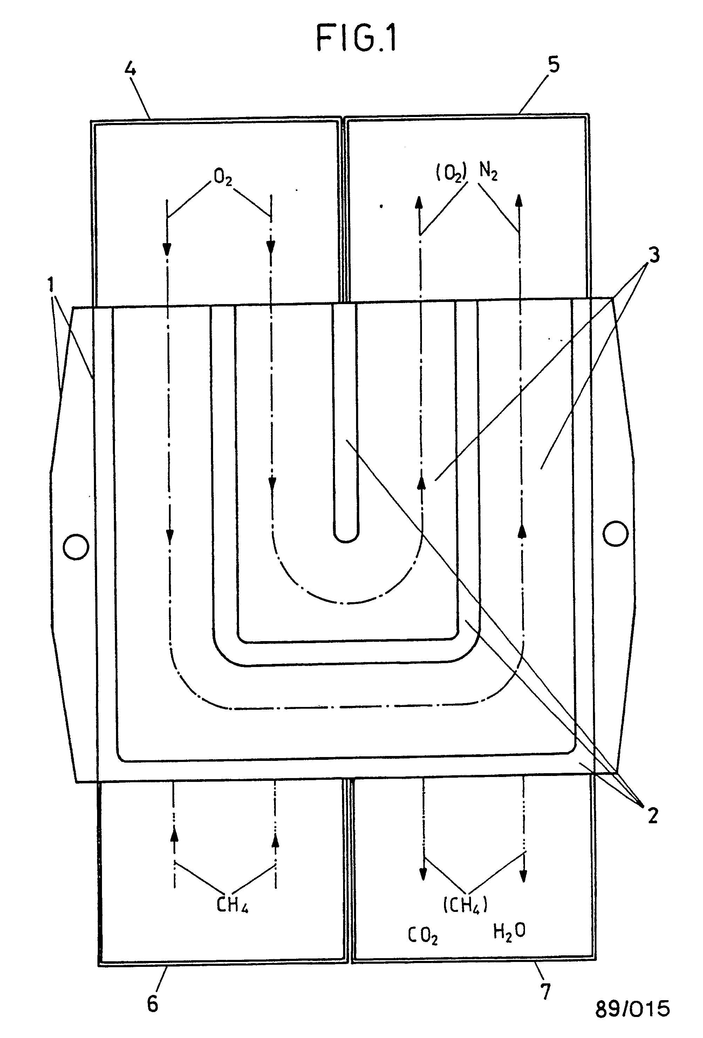

In Fig. 1 ist eine Draufsicht (Grundriss) bzw. ein Schnitt einer Vorrichtung mit Zwischenplatte und Kanälen dargestellt. 1 ist eine Zwischenplatte mit Rippen 2 und U-förmigen Vertiefungen 3, welche in dieser allgemeinen Darstellung auf der Oberseite (Sauerstoffseite) sichtbar eingezeichnet sind. 4 ist die Kanalwand des Zuführungskanal für den gasförmigen Sauerstoffträger (im vorliegenden Fall Luft) im Schnitt. Die Strömungsrichtung ist durch strichpunktierte Linien und Pfeile mit dem Symbol $O_2$ dargestellt. 5 ist die Kanalwand des Auführungskanals für den $O_2$-Ueberschuss und den Ballast (Stickstoff), ebenfalls im Schnitt gezeichnet. Pfeile und das Symbol $(O_2)$; $N_2$ deuten Strömungsrichtung und Stoffzusammenset zung an. 6 ist die Kanalwand des Zuführungskanals für den gasförmigen Brennstoff (im vorliegenden Fall $CH_4$) im Schnitt. Die strichpunktierten Strömungslinien (Symbol $CH_4$) verschwinden unter der Kante der Zwischenplatte 1 und verlaufen auf deren Unterseite weiter (nicht gezeichnet). Sie münden mit den Symbolen $(CH_4)$; $CO_2$; $H_2O$ behaftet - in den Abführungskanal für den Brennstoffüberschuss und die Reaktionsprodukte, dessen Kanalwand 7 im Schnitt dargestellt ist.

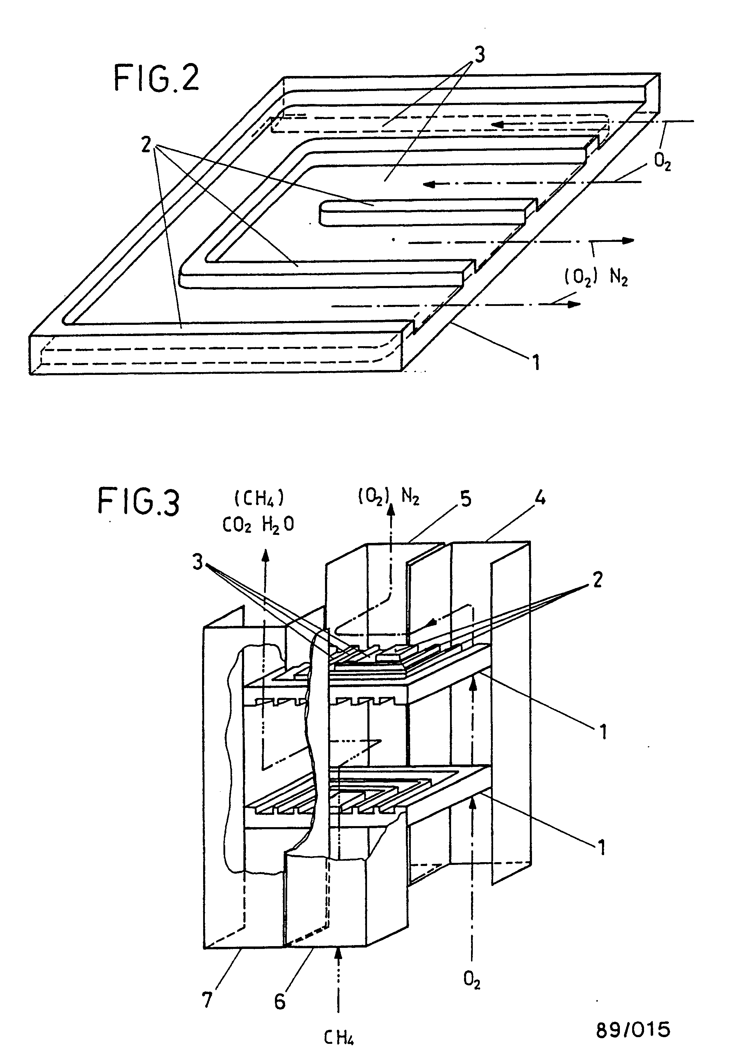

In Fig. 2 ist eine perspektivische Darstellung einer Zwischenplatte wiedergegeben. 1 ist die Zwischenplatte mit Rippen 2 und U-förmigen Vertiefungen 3, welche aus elektrischem Isoliermaterial ($Al_2O_3$; Mullit) oder aus elektrisch leitendem Werkstoff besteht. Sichtbar ist die Oberseite (Sauerstoffseite) der Zwischenplatte 1. Die Strömung der gasförmigen Medien $O_2$ bzw. $(O_2)$; $N_2$ ist durch gestrichelte Linien und Pfeile angedeutet. Auf der nicht sichtbaren Unterseite (Gasseite) sind die Rippen und Vertiefungen in umgekehrter U-Richtung angeordnet.

Fig. 3 bezieht sich auf eine perspektivische Darstellung einer Vorrichtung mit Zwischenplatten und Kanälen. 1 ist eine Zwischenplatte mit Rippen 2 und Vertiefungen 3 auf der Sauerstoffseite. 4 ist die Kanalwand des Zuführungskanals für gasförmigen Sauerstoffträger (im vorliegenden Fall vertikal angeordnet), 5 die entsprechende Kanalwand des Abführungskanals für $O_2$-Ueberschuss und Ballast (Stickstoff). 6 ist die Kanalwand des Zuführungskanals für gasförmigen Brennstoff ($CH_4$), 7 die entsprechende Kanalwand des Abführungskanals für Brennstoffüberschuss und Reaktionsprodukte ($CO_2$; $H_2O$). Die Kanalwände 4, 5, 6, 7 bestehen aus einer warmfesten Legierung oder aus keramischem Material. Der abgewinkelte U-förmige Ver lauf der Führung der gasförmigen Medien ist durch strichpunktierte Linien mit Pfeilen deutlich gemacht: Symbole $O_2$; $(O_2)N_2$; $CH_4$; $(CH_4)$ $CO_2$ $H_2O$.

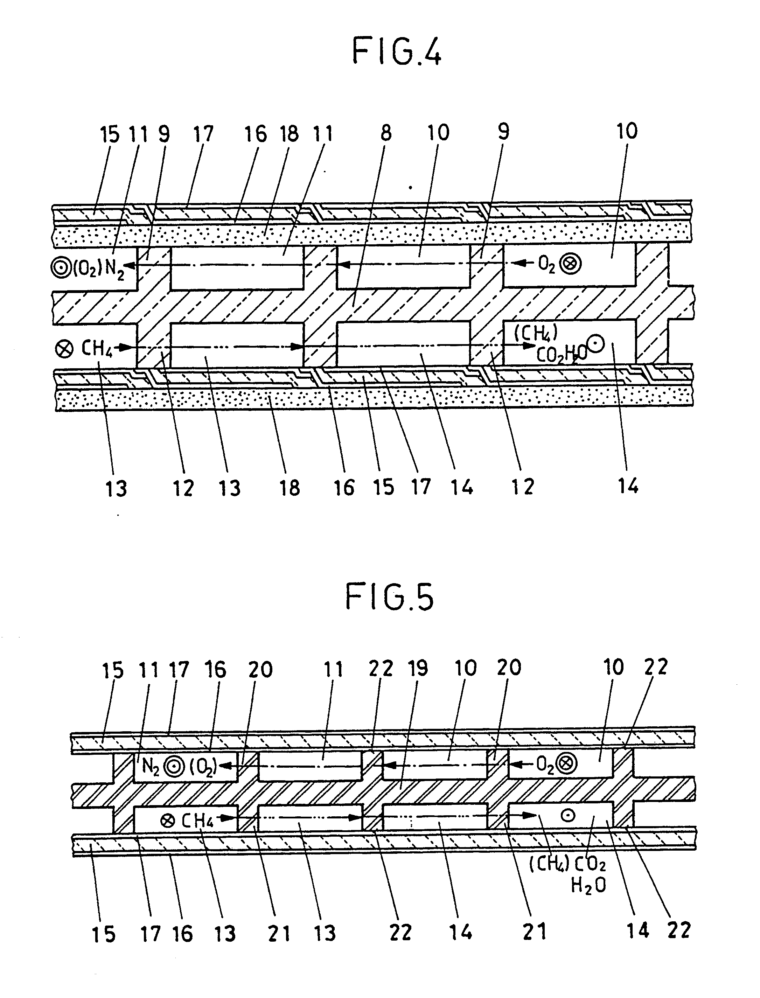

Fig. 4 zeigt einen Schnitt (Aufriss) einer Zwischenplatte aus Isoliermaterial und benachbarten Lagen in Serie geschalteter, dachziegelartig angeordneter Brennstoffzellen-Elemente. 8 ist eine Zwischenplatte aus Isoliermaterial ($Al_2O_3$; Mullit) mit U-förmigen Vertiefungen, deren Form grundsätzlich aus den Figuren 1 und 2 erhellt. 9 ist eine Rippe in der Zwischenplatte 8 auf der Sauerstoffseite, 10 der Raum für den gasförmigen Sauerstoffträger (Symbol $O_2$), der - vom Betrachter gesehen - senkrecht in die Zeichnungsebene hinein strömt. Dies ist durch ein Kreuz mit doppeltem Kreis angedeutet. Im Raum 11 für den $O_2$-Ueberschuss und den Ballast (Stickstoff) strömt das Medium aus der Zeichnungsebene heraus: Symbol $(O_2)$; $N_2$, durch einen Punkt mit doppeltem Kreis angedeutet. 12 ist eine Rippe in der Zwischenplatte 8 auf der Brennstoffseite, 13 der Raum für den gasförmigen Brennstoff ($CH_4$), der - vom Betrachter gesehen -senkrecht in die Zeichnungsebene hinein strömt. Dies ist durch ein Kreuz mit Kreis angedeutet. Im Raum 14 für den Brennstoffüberschuss und die Reaktionsprodukte strömt das Medium aus der Zeichnungsebene heraus: Symbol $(CH_4)$; $CO_2$; $H_2O$, durch einen Punkt mit Kreis angedeutet. Die dachziegelartig mit Ueberlappung zwecks Serieschaltung aneinandergereihten Brennstoffzellen bestehen aus schmalen Streifen, die so liegen, dass in dieser Figur ihr Querschnitt sichtbar ist. Jede Brennstoffzelle wiederum besteht aus einem keramischen Feststoffelektrolyten 15 in Form von dotiertem, stabilisierten $ZrO_2$, einer porösen Sauerstoffelektrode 16 aus La/Mn-Perowskit und einer porösen Brennstoffelektrode 17 aus einem Ni/$ZrO_2$-Cermet. Je eine flache, ebene Brennstoffzellen-Folge ist auf einem gas durchlässigen keramischen Träger 18 (Schaum aus Mullit oder $Al_2O_3$) aufgelegt oder befestigt. In Abweichung zu Fig. 4 ist die Brennstoffzellen-Folge vorteilhafterweise in den hochporösen keramischen Träger 18 beidseitig vollständig eingebettet, was durch Aufschäumen bewerkstelligt werden kann. Bei dieser Ausführung dient also die Zwischenplatte 8 der Abstützung und Trennung sowie Führung der gasförmigen Medien, nicht aber der Stromleitung und -Uebertragung.

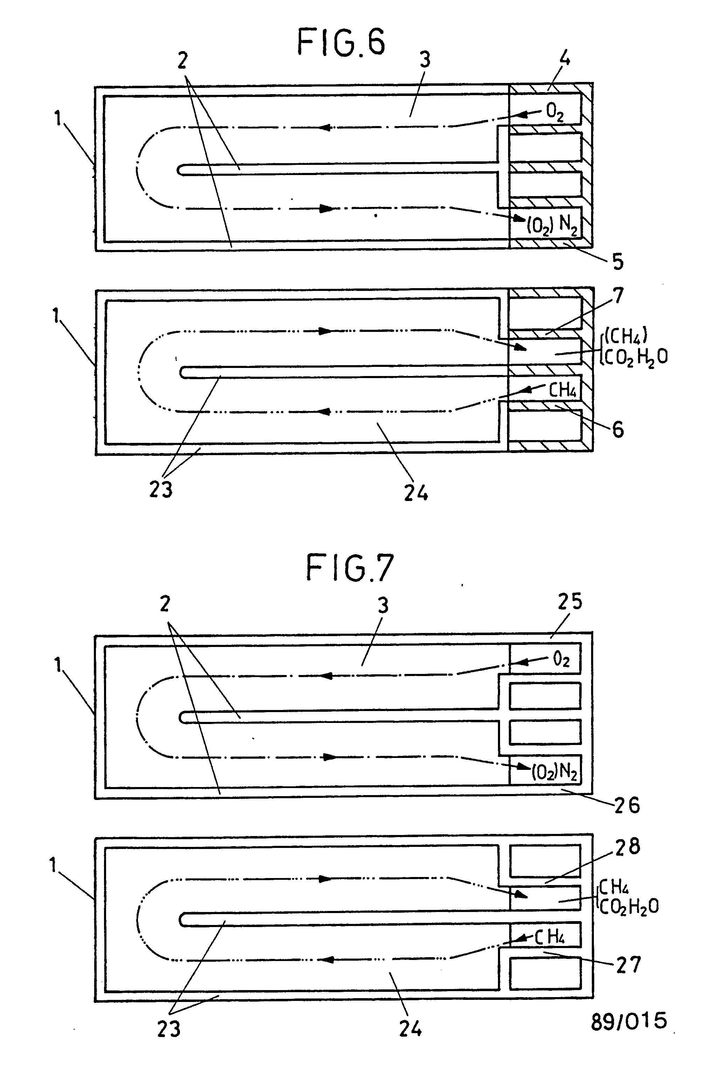

Fig. 5 bezieht sich auf einen Schnitt (Aufriss) einer Zwischenplatte aus elektrisch leitendem Werkstoff und benachbarten Brennstoffzellen. 19 ist eine Zwischenplatte (Bipolarplatte) aus elektrisch leitendem Werkstoff. Letzterer kann ein Hochtemperaturmetall bzw. eine Hochtemperaturlegierung (Nickelbasis-Superlegierung), ein keramischer Werkstoff (dotiertes $SnO_2$; $SiC$) oder ein Cermet (Ni/$ZrO_2$; Ni/$Al_2O_3$) sein. Die Rippen und Vertiefungen sind analog Fig. 1 und 2 ausgebildet. 20 ist eine Rippe in der Zwischenplatte 19 auf der Sauerstoffseite, 21 eine solche auf der Brennstoffseite. 22 ist eine Stromübergangsstelle (Druckfläche) zwischen einer Rippe und der benachbarten Elektrode einer Brennstoffzelle. Die übrigen Bezugszeichen für die Raumanordnung und die Strömung der gasförmigen Medien sowie die Brennstoffzellen entsprechen genau denjenigen der Fig. 4. Die Brennstoffzellen bestehen im vorliegenden Fall aus flachen, ebenen Platten, die durch die Zwischenplatte 19 senkrecht zu ihrer Plattenebene elektrisch in Serie geschaltet sind. Die Zwischenplatte 19 dient also bei dieser Ausführung zusätzlich als Bipolarplatte der Stromleitung und Uebertragung von einer Brennstoffzelle auf die benachbarte Zelle.

Fig. 6 zeigt eine schematische Draufsicht (Grundriss) bzw. einen Schnitt einer Vorrichtung mit Zwischenplatte und ein seitig angeordneten Kanälen. 1 ist die Zwischenplatte mit Rippen 2 und U-förmigen Vertiefungen 3, welche auf der Oberseite (Sauerstoffseite) sichtbar sind. An einer der Stirnseiten der aus Isoliermaterial oder aus elektrisch leitendem Werkstoff bestehenden Zwischenplatte 1 sind bündig anschliessend die Kanäle für die gasförmigen Medien angeordnet. Die Bezugszeichen 4 und 5 sowie die Symbole entsprechen genau denjenigen der Fig. 1. Im unteren Teil der Fig. 6 ist die Unterseite (Brennstoffseite) dargestellt. 23 sind die Rippen, 24 die U-förmigen Vertiefungen in der Zwischenplatte 1 auf der Brennstoffseite. Die Bezugszeichen 6 und 7 und die Symbole entsprechen denjenigen der Fig. 1. Die Kanäle sind im vorliegenden Fall in einem einheitlichen (monolithischen) Bauelement zusammengefasst: In der Figur im Schnitt schraffiert dargestellt.

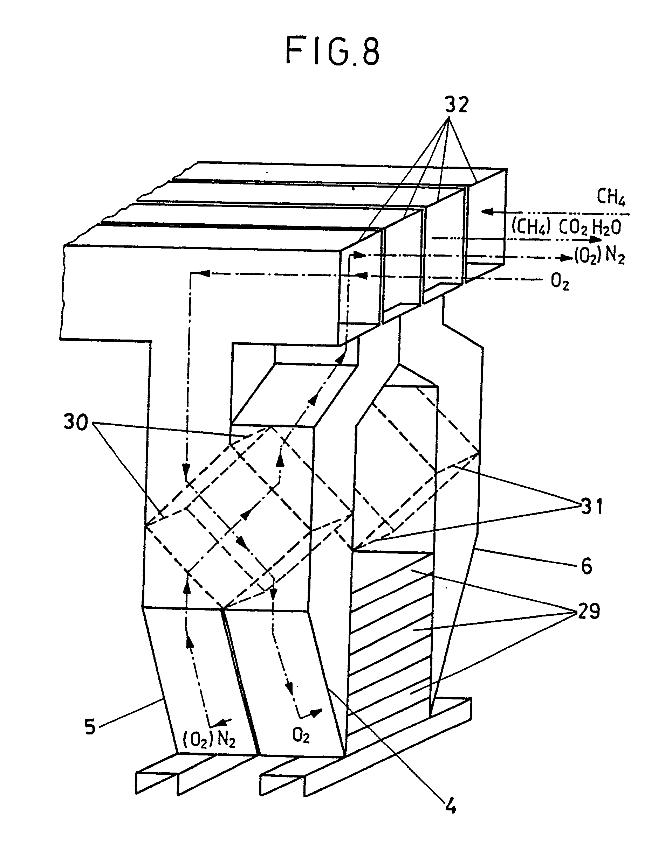

Fig. 7 zeigt eine schematische Draufsicht (Grundriss) einer Vorrichtung mit Zwischenplatte und in diese integrierte Kanalteile. Die Darstellung entspricht derjenigen von Fig. 6: Das obere Bild bezieht sich auf die Oberseite (Sauerstoffseite), das untere auf die Unterseite (Brennstoffseite) der Zwischenplatte 1 aus Isoliermaterial oder aus elektrisch leitendem Werkstoff. 25 ist ein Teilstück der Kanalwand des Zuführungskanals für den gasförmigen Sauerstoffträger (Luft), welches durch eine Ecke der Zwischenplatte 1 selbst gebildet wird. 26 ist ein Teilstück der Kanalwand des Abführungskanals für O₂-Ueberschuss und Ballast (Stickstoff), welcher ebenfalls durch eine Ecke der Zwischenplatte 1 selbst gebildet wird. 27 ist ein Teilstück der Kanalwand des Zuführungskanals für den gasförmigen Brennstoff (CH₄), welcher durch einen Fortsatz in der Schmalseite der Zwischenplatte 1 gebildet wird. 28 ist ein Teilstück der Kanalwand des Abführungskanals für Brennstoffüberschuss und Reaktionsprodukte (CO₂; H₂O), welches durch einen Fortsatz in der Schmalseite der Zwischenplatte 1 gebildet wird. Dank der Integrierung dieser Kanalteilstücke in der Zwischenplatte kann auf ein separates, die Kanäle konstituierendes Bauelement verzichtet werden.

Fig. 8 bezieht sich auf eine perspektivische Darstellung einer Vorrichtung mit einem Stapel von Brennstoffzellen und Zwischenplatten und Kanälen. 29 ist ein Stapel, der abwechslungsweise aus Brennstoffzellen und Zwischenplatten aufgebaut ist. Die Bezugszeichen 4, 5 und 6 entsprechen den Kanalwänden in den Figuren 1 und 3. 30 ist ein auf dem Kreuzstromprinzip beruhender Wärmeaustauscher zwischen dem aus O₂-Ueberschuss und Ballast (Stickstoff) bestehenden abgeführten Strom und dem aus gasförmigen Sauerstoffträger (Luft) bestehenden zugeführten Strom gasförmiger Medien. Entsprechend ist ein weiterer Wärmeaustauscher 31 zwischen dem aus dem Brennstoffüberschuss und den Reaktionsprodukten (CO₂; H₂O) bestehenden abgeführten Strom und dem aus gasförmigem Brennstoff (CH₄) bestehenden zugeführten Strom gasförmiger Medien vorhanden. 32 sind die Hauptkanäle für die gasförmigen Medien, deren Strömungsverlauf durch mit Pfeilen und Symbolen versehene gestrichelte Linien dargestellt ist.

Die Erfindung ist nicht auf den Figuren entsprechenden Ausführungsbeispiele beschränkt.

Die Vorrichtung zur Energieumwandlung besteht aus Hochtemperatur-Brennstoffzellen und zwischen diesen angeordneten Bauelementen zur Führung der gasförmigen Medien, wobei eine Vielzahl von ebenen Brennstoffzellen bestehend aus einem keramischen Feststoffelektrolyten (15) aus stabilisiertem ZrO₂, einer Sauerstoffelektrode (16) aus einem La/Mn-Perowskit und einer Brennstoffelektrode (17) aus einem Ni/ZrO₂-Cermet stapelartig angeordnet ist, indem das Bauelement zwischen den Brennstoffzellen (15, 16, 17) aus einer Zwischenplatte (1) mit Rippen (2) und im Grundriss U-förmigen Vertiefungen (3) sowohl auf der Sauerstoffseite wie auf der Brennstoffseite besteht, wobei die U-förmigen Vertiefungen (3) im Grundriss mit ihrer offenen Seite auf der Brennstoffseite der Zwischenplatte (1) entgegengesetzt wie auf der Sauerstoffseite liegen, so dass die von der Zwischenplatte (1) und den benachbarten Brennstoffzellen gebildeten Räume (10, 11; 13, 14) den Strom des gasförmigen Sauerstoffträgers O₂ in entgegengesetzter Richtung wie denjenigen des gasförmigen Brennstoffs CH₄ führen.

In einer Ausführungsform besteht die Vorrichtung darin, dass in einer Plattenebene mehrere, dachziegelartig mit Ueberlappung angeordnete, auf einem gasdurchlässigen keramischen Träger (18) aufgebaute oder in diesem eingebettete, elektrisch in Serie geschaltete Brennstoffzellen (15, 16, 17) vorhanden sind und dass zwischen je zwei benachbarten aus Brennstoffzellen (15, 16, 17) und Träger (18) bestehenden Plattenlagen eine Zwischenplatte (8) aus Isoliermaterial mit U-förmigen Vertiefungen und Rippen (9, 12) vorgesehen ist. In einer anderen Ausführungsform besteht die Vorrichtung darin, dass in einer Plattenebene eine einzige, die ganze Querschnittsfläche des Stapels einnehmende Brennstoffzelle (15, 16, 17) vorhanden ist und dass zwischen je zwei benachbarten, aus Brennstoffzellen (15, 16, 17) bestehenden Plattenlagen eine Zwischenplatte (19) aus elektrisch leitendem Werkstoff mit U-förmigen Vertiefungen und Rippen (20; 21) vorgesehen ist.

Die Vorrichtung wird in vorteilhafter Weise derart ausgeführt, dass in einem Stapel von Brennstoffzellen und Zwischenplatten jede einzelne Zwischenplatte (1) so ausgebildet ist, dass sie auf der einen Seite Rippen (2) und U-förmige Vertiefungen (3) aufweist, die an einer Schmalseite aussenliegende Oeffnungen für die Zufuhr des Sauerstoffträgers O₂ und für die Abfuhr des O₂-Ueberschusses und des Ballastes (O₂); N₂ besitzt, welche bündig an die stirnseitig aussen anliegenden Kanalwände (4; 5) anschliessen, und dass die Zwischenplatte (1) auf der anderen Seite symmetrisch angeordnete Rippen (23) und U-förmige Vertiefungen (24) aufweist, die an der gleichen Schmalseite innenliegenden Oeffnungen für die Zufuhr des Brennstoffs CH₄ und für die Abfuhr des Brennstoffüberschusses und der Reaktionsprodukte (CH₄); CO₂; H₂O besitzen, welche bündig an die stirnseitig innen anliegenden Kanalwände (6; 7) anschliessen, und dass schliesslich alle Kanalwände (4; 5; 6; 7) für die gasförmigen Medien in einem monolithischen, an einer Schmalseite des Stapels angeordneten Körper zusammengefasst sind. Eine weitere vorzugsweise Ausführung der Vorrichtung besteht darin, dass in einem Stapel von Brennstoffzellen und Zwischenplatten jede einzelne Zwischenplatte (1) so ausgebildet ist, dass sie auf der einen Seite Rippen (2) und U-förmige Vertiefungen (3) aufweist, die an einer Schmalseite aussenliegende Oeffnungen für die Zufuhr des Sauerstoffträgers O₂ und für die Abfuhr des O₂-Ueberschusses und des Ballastes (O₂); N₂ besitzen, an welche unmittelbar die jeweils Teilstücke (25; 26) der Kanalwände bildenden Ecken der Zwischenplatte (1) anschliessen, und dass die Zwischenplatte (1) auf der anderen Seite symmetrisch angeordnete Rippen (23) und U-förmige Vertiefungen (24) aufweist, die an der gleichen Schmalseite innenliegende Oeffnungen für die Zufuhr des Brennstoffs $CH_4$ und für die Abfuhr des Brennstoffüberschusses und der Reaktionsprodukte ($CH_4$); $CO_2$; $H_2O$ besitzen, an welche unmittelbar die jeweils Teilstücke (27; 28) der Kanalwände bildenden innenliegenden Fortsätze der Zwischenplatte (1) anschliessen, dergestalt, dass alle in die jeweilige Zwischenplatte (1) integrierten Teilstücke (25; 26; 27; 28) der Kanalwände gesamthaft an einer Schmalseite des Stapels die vollständigen Kanäle für die gasförmigen Medien bilden.

In sehr vorteilhafter Weise wird die Vorrichtung so ausgeführt, dass ein Stapel (29) von Brennstoffzellen und Zwischenplatten mit seitlich angeordneten Kanälen zur Führung der gasförmigen Medien vorgesehen ist, wobei in den Kanälen Wärmeaustauscher für die Sauerstoffseite $O_2/(O_2)$; $N_2$ und für die Brennstoffseite $CH_4/(CH_4)$; $CO_2$; $H_2O$ untergebracht sind.

**Ansprüche**

1. Vorrichtung zur Energieumwandlung mittels HochtemperaturBrennstoffzellen und zwischen diesen angeordneten Bauelementen zur Führung der gasförmigen Medien, wobei eine Vielzahl von ebenen Brennstoffzellen bestehend aus einem keramischen Feststoffelektrolyten (15) aus stabilisiertem $ZrO_2$, einer Sauerstoffelektrode (16) aus einem La/Mn-Perowskit und einer Brennstoffelektrode (17) aus einem Ni/$ZrO_2$-Cermet stapelartig angeordnet ist, dadurch gekennzeichnet, dass das Bauelement zwischen den Brennstoffzellen (15, 16, 17) aus einer Zwischenplatte (1) mit Rippen (2) und im Grundriss U-förmigen Vertiefungen (3) sowohl auf der Sauerstoffseite wie auf der Brennstoffseite besteht, wobei die U-förmigen Vertiefungen (3) im Grundriss mit ihrer offenen Seite auf der Brennstoffseite der Zwischenplatte (1) entgegengesetzt wie auf der Sauerstoffseite liegen, so dass die von der Zwischenplatte (1) und den benachbarten Brennstoffzellen gebildeten Räume (10, 11; 13, 14) den Strom des gasförmigen Sauerstoffträgers $O_2$ in entgegengesetzter Richtung wie denjenigen des gasförmigen Brennstoffs $CH_4$ führen.

2. Vorrichtung nach Anspruch 1, dadurch gekennzeichnet, dass in einer Plattenebene mehrere, dachziegelartig mit Ueberlappung angeordnete, auf einem gasdurchlässigen keramischen Träger (18) aufgebaute oder in diesem eingebettete, elektrisch in Serie geschaltete Brennstoffzellen (15, 16, 17) vorhanden sind und dass zwischen je zwei benachbarten aus Brennstoffzellen (15, 16, 17) und Träger (18) bestehenden Plattenlagen eine Zwischenplatte (8) aus Isolier material mit U-förmigen Vertiefungen und Rippen (9, 12) vorgesehen ist.

3. Vorrichtung nach Anspruch 1, dadurch gekennzeichnet, dass in einer Plattenebene eine einzige, die ganze Querschnittsfläche des Stapels einnehmende Brennstoffzelle (15, 16, 17) vorhanden ist und dass zwischen je zwei benachbarten, aus Brennstoffzellen (15, 16, 17) bestehenden Plattenlagen eine Zwischenplatte (19) aus elektrisch leitendem Werkstoff mit U-förmigen Vertiefungen und Rippen (20; 21) vorgesehen ist.

4. Vorrichtung nach Anspruch 1, dadurch gekennzeichnet, dass in einem Stapel von Brennstoffzellen und Zwischenplatten jede einzelne Zwischenplatte (1) so ausgeführt ist, dass sie auf der einen Seite Rippen (2) und U-förmige Vertiefungen (3) aufweist, die an einer Schmalseite aussenliegende Oeffnungen für die Zufuhr des Sauerstoffträgers $O_2$ und für die Abfuhr des $O_2$-Ueberschusses und des Ballastes ($O_2$); $N_2$ besitzt, welche bündig an die stirnseitig aussen anliegenden Kanalwände (4; 5) anschliessen, und dass die Zwischenplatte (1) auf der anderen Seite symmetrisch angeordnete Rippen (23) und U-förmige Vertiefungen (24) aufweist, die an der gleichen Schmalseite innenliegenden Oeffnungen für die Zufuhr des Brennstoffs $CH_4$ und für die Abfuhr des Brennstoffüberschusses und der Reaktionsprodukte ($CH_4$); $CO_2$; $H_2O$ besitzen, welche bündig an die stirnseitig innen anliegenden Kanalwände (6; 7) anschliessen, und dass schliesslich alle Kanalwände (4; 5; 6; 7) für die gasförmigen Medien in einem monolithischen, an einer Schmalseite des Stapels angeordneten Körper zusammengefasst sind.

5. Vorrichtung nach Anspruch 1, dadurch gekennzeichnet, dass in einem Stapel von Brennstoffzellen und Zwischenplatten jede einzelne Zwischenplatte (1) so ausgeführt ist, dass sie auf der einen Seite Rippen (2) und U-förmige Vertiefungen (3) aufweist, die an einer Schmalseite aussenliegende Oeffnungen für die Zufuhr des Sauerstoffträgers $O_2$ und für die Abfuhr des $O_2$-Ueberschusses und des Ballastes ($O_2$); $N_2$ besitzen, an welche unmittelbar die jeweils Teilstücke (25; 26) der Kanalwände bildenden Ecken der Zwischenplatte (1) anschliessen, und dass die Zwischenplatte (1) auf der anderen Seite symmetrisch angeordnete Rippen (23) und U-förmige Vertiefungen (24) aufweist, die an der gleichen Schmalseite innenliegende Oeffnungen für die Zufuhr des Brennstoffs $CH_4$ und für die Abfuhr des Brennstoffüberschusses und der Reaktionsprodukte ($CH_4$); $CO_2$; $H_2O$ besitzen, an welche unmittelbar die jeweils Teilstücke (27; 28) der Kanalwände bildenden innenliegenden Fortsätze der Zwischenplatte (1) anschliessen, dergestalt, dass alle in die jeweilige Zwischenplatte (1) integrierten Teilstücke (25; 26; 27; 28) der Kanalwände gesamthaft an einer Schmalseite des Stapels die vollständigen Kanäle für die gasförmigen Medien bilden.

6. Vorrichtung nach Anspruch 1, dadurch ·gekennzeichnet, dass ein Stapel (29) von Brennstoffzellen und Zwischenplatten mit seitlich angeordneten Kanälen zur Führung der gasförmigen Medien vorgesehen ist, wobei in den Kanälen Wärmeaustauscher für die Sauerstoffseite $O_2/(O_2)$; $N_2$ und für die Brennstoffseite $CH_4/(CH_4)$; $CO_2$; $H_2O$ untergebracht sind.

# FIG.1

89/015

FIG.2

3

2

$O_2$

$(O_2)$ $N_2$

1

FIG.3

$(CH_4)$
$CO_2$ $H_2O$

$(O_2)$ $N_2$ 5 4

3

2

1

1

7 6 $CH_4$ $O_2$

# FIG.4

# FIG.5

89/015

# FIG.6

# FIG.7

89/015

# FIG.8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | PATENT ABSTRACTS OF JAPAN, Band 7, Nr. 288 (E-218)[1433], 22. Dezember 1983; & JP-A-58 163 181 (MITSUBISHI DENKI K.K.) 27-09-1983 * Zusammenfassung * --- | 1,3 | H 01 M 8/24 H 01 M 8/02 H 01 M 8/12 |
| Y | FR-A-2 306 540 (BROWN, BOVERI & CIE AG) * Figur 6; Patentansprüche 1,5-7 * --- | 1,3 | |
| Y | EP-A-0 275 661 (ALLIED SIEMAL) * Figur 1; Patentansprüche 1; Spalte 11, Zeilen 10-12; Spalte 14, Zeilen 47-55 * --- | 1,3 | |
| A | US-A-3 718 506 (W. FISCHER et al.) * Figur 1; Spate 3, Zeilen 48-58; Spalte 4, Zeilen 20-27 * --- | 6 | |
| A | WO-A-8 606 762 (HSU) * Figur 9; Seite 18, Absatz 2 - Seite 19, Absatz 1 * --- | 6 | RECHERCHIERTE SACHGEBIETE (Int. Cl.5) |
| A | US-A-4 407 904 (NORIHIRA UOZUMI et al.) ----- | | H 01 M |

Der vorliegende Recherchenbericht wurde für alle Patentansprüche erstellt

| Recherchenort | Abschlußdatum der Recherche | Prüfer |
|---|---|---|
| DEN HAAG | 15-05-1990 | D'HONDT J.W. |